# EUROPÄISCHE PATENTANMELDUNG

(11) **EP 1 329 922 A2**
(43) Veröffentlichungstag der Anmeldung: **23.07.2003**
(21) Anmeldenummer: 03000893.2
(22) Anmeldetag: 16.01.2003
(51) Int. Cl.: H01H 37/32, F03G 7/06

(54) **Thermisch betätigter Aktuator mit SMA-Element**

(30) Priorität: 17.01.2002 DE 10201789
(71) Anmelder: Inventas AG, 6340 Baar (ZG) (CH)
(72) Erfinder: Partel, Robert, 6300 Zug (CH)
(74) Vertreter: Riebling, Peter, Dr.-Ing.

(57) **Zusammenfassung**

Die vorliegende Erfindung beschreibt einen thermisch steuerbarer Aktuator mit SMA-Element, und zeichnet sich dadurch aus, dass in Gegenüberstellung zur Betätigungsfläche des SMA-Elementes eine Längenkompensationseinrichtung angeordnet ist, die die alterungsbedingte Längenänderung des SMA-Elementes kompensiert. Die Längenkompensationseinrichtung lässt den Schaltweg für zu betätigende Kontakte unabhängig von der alterungsbedingten Längenänderung des SMA-Elementes unverändert bleiben, so dass der einmal eingestellte Abstand dauerhaft gewährleistet werden kann.

## Beschreibung

Gegenstand der Erfindung ist ein thermisch betätigtes Aktuator SMA-Element nach dem Oberbegriff des Patentanspruches 1.

Der Begriff SMA steht für Shape Memory Alloy (Metalle mit Erinnerungsvermögen / Formgedächtnis). Ein derartiger, thermisch betätigter Aktuator ist beispielsweise mit dem Gegenstand der DE 44 06 589 A1 bekannt geworden. Das stabförmige SMA-Element ändert seine Länge, wenn seine Temperatur durch Wärme erhöht wird. Diese Längenänderung wird zur Schaltung eines Kontaktes verwendet.

Es sind andere SMA-Elemente bekannt, bei denen eine Temperaturerhöhung zu einer Zusammenziehung führt. Wichtig bei den genannten Formgedächtnis-Elementen ist, dass bei Wegfall der Temperaturerhöhung oder Temperaturminderung das Element wieder in seine Ausgangslage zurückkehrt.

Auf der Basis dieser Anwendung schlägt die DE 44 06 589 A1 vor, einen Schaltkontakt herzustellen, bei dem eine Erwärmung des SMA-Elementes auf eine Schaltwippe wirkt, die ihrerseits mit einem beweglichen Kontakt versehen ist, der mit einem feststehenden Kontakt zusammenarbeitet.

Nun hat sich bei derartigen SMA-Elementen gezeigt, dass leider die Formänderung nicht reversibel ist. Nach einer Vielzahl von Schaltzyklen neigt das Element dazu, in seiner gestreckten Lage zu verbleiben, wodurch im Falle der DE 44 06 589 A1 der Schaltabstand zwischen den Kontakten sich in nachteiliger Weise verringert. Damit wird die Überschlagsfestigkeit des Schaltkontaktes in nachteiliger Weise vermindert und es kann sogar zu einem dauernden unerwünschten Schließen der Kontakte kommen.

Der Erfindung liegt deshalb die Aufgabe zugrunde, allgemein einen thermisch steuerbaren Aktuator in der Weise weiterzubilden, dass auch bei einer Vielzahl von Schaltzyklen stets annähernd der umverformte Ruhezustand erreicht wird.

Zur Lösung der gestellten Aufgabe ist die Erfindung dadurch gekennzeichnet, dass in Gegenüberstellung zur Betätigungsfläche des SMA-Streifens eine Längenkompensationseinrichtung angeordnet ist.

Mit der gegebenen technischen Lehre ergibt sich nun der wesentliche Vorteil, dass Dank dieser Kompensationseinrichtung stets dafür gesorgt ist, dass eine unerwünschte Längenveränderung des Streifens von der erfindungsgemäßen Kompensationseinrichtung kompensiert wird.

In einer ersten, bevorzugten Ausführungsform besteht diese Kompensationseinrichtung im Wesentlichen aus einem Konus, welcher eine zugeordnete, größere Öffnung in dem SMA-Streifen durchsetzt und der Streifen federbelastet an dem Konus anliegt und dort eine Klemmkante bildet. Ferner ist wesentlich bei diesem Ausführungsbeispiel, dass der Streifen in senkrechte Richtung von dem Konus durchsetzt ist und federbelastet an dem Konus herauf oder herunter wandern kann, was zu einer entsprechenden Kompensation einer Längenänderung führt.

In einer zweiten Ausgestaltung der Erfindung ist es vorgesehen, statt der federbelasteten Anlage an einem Konus eine Art einer federbelasteten Sperrklinke auf dem SMA-Streifen aufsitzt. Diese Sperrklinke kann als starre mechanische Klinke oder auch als Klemmfeder ausgebildet werden. In der Art eines mechanischen Klinkengesperres wird damit erreicht, dass sich der Streifen in der einen Richtung unter dem Klinkengesperre hindurch schieben kann, während es in der anderen Richtung (Betätigungsrichtung) gesperrt wird.

In einer dritten Ausführungsform ist es vorgesehen, dass eine Längenänderung eines als Rundstab ausgebildeten SMA-Drahtes durch entsprechende Konusflächen ausgeglichen wird, und in einer vierten Ausführungsform ist es vorgesehen, dass der Ausgleich der Längenänderung eines SMA-Drahtes durch die Verdrehung einer Gewindehülse in Umfangsrichtung wiederum in axiale Richtung ausgeglichen wird.

In Kurzfassung wird nachfolgend noch einmal das erst genannte Ausführungsbeispiel geschildert:

Nachstellung durch federbelastetes Verschieben auf konischen Teil:

Es ist z.B. eine Aktuatorenausführung mit SMA-Streifen möglich, der auf der einen Seite beweglich in einem Hebelbolzen gelagert ist. Der Hebel besitzt eine Gegenfeder und Anschläge. Der Hebel spannt mit der Gegenfeder den SMA Streifen. Bei Erwärmung zieht sich in diesem Fall der SMA-Streifen zusammen und bewegt gleichzeitig den Hebel.

Auf der anderen Seite wird der Streifen in einem konischen Bolzen gehalten. Der Bolzen liegt im Langloch des Streifens auf. Mit einer Druckfeder am Bolzen wird der Streifen auf dem konischen Bolzen nachgeschoben. Damit kann eine entstehende Verlängerung des Streifens kompensiert werden. Die Ausgangspositionen des Hebels an den Anschlägen bleiben somit erhalten. Es ist zweckmäßig, den Konus so auszubilden, dass ein Selbsthemmungseffekt auftritt.

Ein wesentlicher Vorteil ist, dass auch nicht konditioniertes Material, d. h., unbehandeltes Material eingesetzt werden kann. Es sind damit keine vorgängigen Streck-Heizzyklen notwendig, die auf weniger Abwanderung zielen, d. h., die am Anfang großen Abwanderungen werden abgefangen. Damit entsteht auch ein entsprechender Kostenvorteil.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch ein erstes Ausführungsbeispiel der Kompensationseinrichtung;
- Figur 2:: Schnitt gemäß der Linie II - II in Figur 3;
- Figur 3:: Draufsicht auf die Darstellung in Figur 1 in Pfeilrichtung III;
- Figur 4:: eine zweite Ausführungsform im Vergleich zur Figur 1;
- Figur 5:: Draufsicht auf die Ausführungsform nach Figur 4 in Pfeilrichtung V;
- Figur 6:: die schematisiert dargestellte dritte Ausführungsform der Kompensationseinrichtung;
- Figur 7:: eine Kompensationseinrichtung nach einer vierten Ausführungsform;
- Figur 8:: eine fünfte Ausführungsform;
- Figur 9:: eine sechste Ausführungsform einer Kompensationseinrichtung.
- Figur 10:: eine siebte Ausführungsform einer Kompensationseinrichtung.

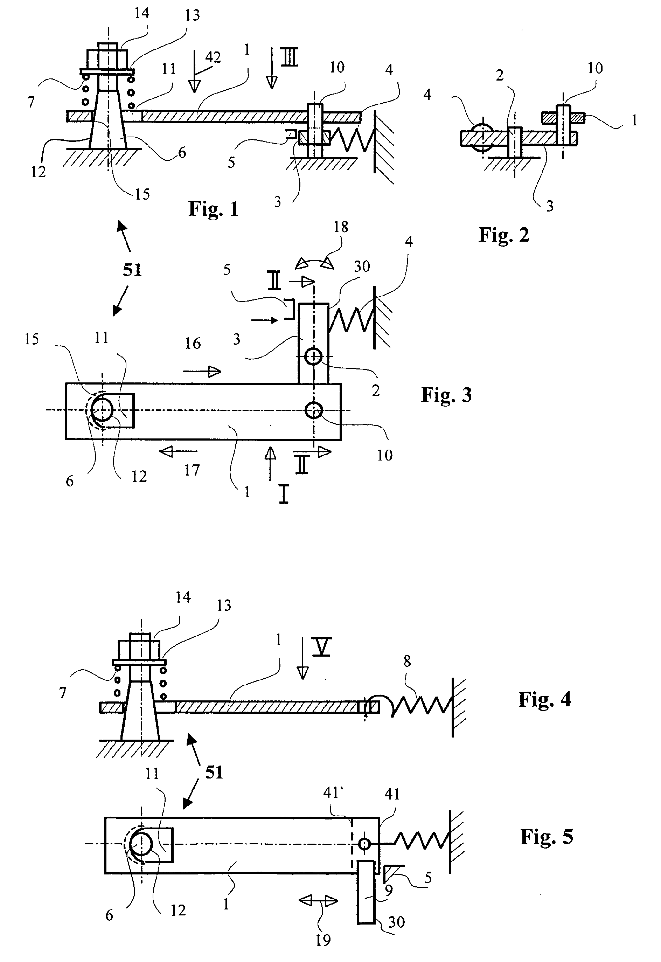

In Figur 1 bis 3 ist allgemein dargestellt, dass ein SMA-Streifen als rechteckförmiger, länglicher Streifen vorhanden ist. Neben dieser Rechtecksquerschnittsform können auch runde Querschnittsformen, ovale oder alle anderen beliebigen Querschnittsformen verwendet werden. Wichtig ist, dass die Betätigung an einer Betätigungsfläche 30 erfolgt, mit dem der SMA-Streifen auf ein entsprechend betätigtes Element wirkt. Im gezeigten Ausführungsbeispiel erfolgt jedoch die Betätigung nicht unmittelbar durch den Streifen 1 selbst, sondern über eine entsprechende Hebelübersetzung. Zu diesem Zweck ist auf einem gehäusefesten Hebelbolzen 2 ein Hebel 3 schwenkbar gelagert, der als zweiarmiger Hebel ausgebildet ist. Der eine Hebelteil dieses zweiarmigen Hebels 3 ist in einem Lagerbolzen 10 am freien Ende des Streifens 1 aufgenommen, während das gegenüberliegende Hebelteil des Hebels 3 die auf der anderen Seite die Betätigungsfläche 30 für ein nicht näher dargestelltes, betätigtes Element ausbildet und die gegenüberliegende Seite an einem gehäusefesten Anschlag 5 anliegt. Dieser Hebelteil wird von einer Gegenfeder 4 gegen den gehäusefesten Anschlag 5 gepresst.

Im gezeigten Ausführungsbeispiel erfolgt bei einer thermischen Erwärmung des Streifens 1 eine Zusammenziehung in Pfeilrichtung 17. Dadurch wird der Hebel 3 in Pfeilrichtung 18 nach rechts verschwenkt und seine Betätigungsfläche 30 betätigt ein entsprechendes Element.

In unerwünschter Weise verbleibt jedoch bei einer Vielzahl von Schaltzyklen der Streifen mit einer unerwünschten Längenvergrößerung, so dass er sich im Wesentlichen in Pfeilrichtung 16 verschieben würde, wenn sein linkes Ende festliegen würde.

Hier setzt die Erfindung ein, die nun vorsieht, dass diese unerwünschte Längenänderung kompensiert wird. Zu diesem Zweck ist die auf der linken Seite in Figur 1 und 3 dargestellte Kompensationseinrichtung vorgesehen. Sie besteht im Wesentlichen aus einem Langloch 11 im Streifen 1, welches in senkrechte Richtung von einem konischen Bolzen 6 durchgriffen ist. Der Konus 12 des Bolzens bildet somit mit der entsprechenden Fläche im Langloch 11 eine Klemmkante 15 aus. Der Streifen wird hierbei in senkrechte Richtung zu seiner Längserstreckung von einer Druckfeder 7 gegen den Konus 12 gepresst, so dass es zu einer Selbsthemmung kommt.

Verlängert sich nun der Streifen 1 in unerwünschter Weise in Pfeilrichtung 16, dann wird der Streifen 1 aufgrund seines Langloches 11 auf dem erweiterten Konus in Pfeilrichtung 17 verschoben, wobei er zusätzlich durch die Druckfeder 7 in Pfeilrichtung 42 auf den Konus des konischen Bolzen 6 gedrückt wird um die Sperrwirkung in die entgegengesetzte Richtung aufrechtzuerhalten, wodurch der gesamte Streifen nun in Pfeilrichtung 17 nach links verschoben wird, jedoch nach rechts gesperrt wird und so nicht zurück kann. Es wird hierbei darauf hingewiesen, dass die Druckfeder 7 an einer Scheibe 13 anliegt, die mit einer Mutter 14 vorgespannt werden kann.

Mit der Verschiebung des Streifens 1 in Pfeilrichtung 17 ist die erwünschte Längenkorrektur geschehen. D. h., der Hebel 3 wird immer an seinem Anschlag 5 zur Anlage gebracht werden, ohne dass er vom Anschlag abhebt und in unerwünschter Weise im Ruhezustand in Pfeilrichtung 18 nach rechts verschwenkt.

Der Streifen 1 bleibt in Ruhestellung daher immer gespannt auf dem Konus 12 sitzen und die Klemmkante 15 bleibt im Eingriff mit dem Konus 12.

Der Hebel 3 im Ausführungsbeispiel nach den Figuren 1 bis 3 dient nur zur Erzielung eines größeren Betätigungsweges.

Ein dem gegenüber vereinfachtes Ausführungsbeispiel ist in den Figuren 4 und 5 dargestellt. Für die gleichen Teile gelten die gleichen Bezeichnungen. Hier ist wiederum dargestellt, dass der Streifen 1 unmittelbar durch eine Zugfeder 8 auf Spannung gehalten wird, so dass wiederum die Klemmkante 15 klemmend an den Konus 12 anliegt.

Der Streifen 1 ist fest mit einem Mitnehmer 9 verbunden, der auf der einen Seite eine Betätigungsfläche 30 erbringt und der mit der Längenänderung des Streifens in den Pfeilrichtungen 19 nach links und rechts verschiebbar ist.

Bei der entsprechenden unerwünschten Längenausdehnung des SMA-Streifens 1 in Pfeilrichtung 16 kommt es wieder zu der in Figur 1 bis 3 erwünschten Kompensation der Längenänderung in Pfeilrichtung 17.

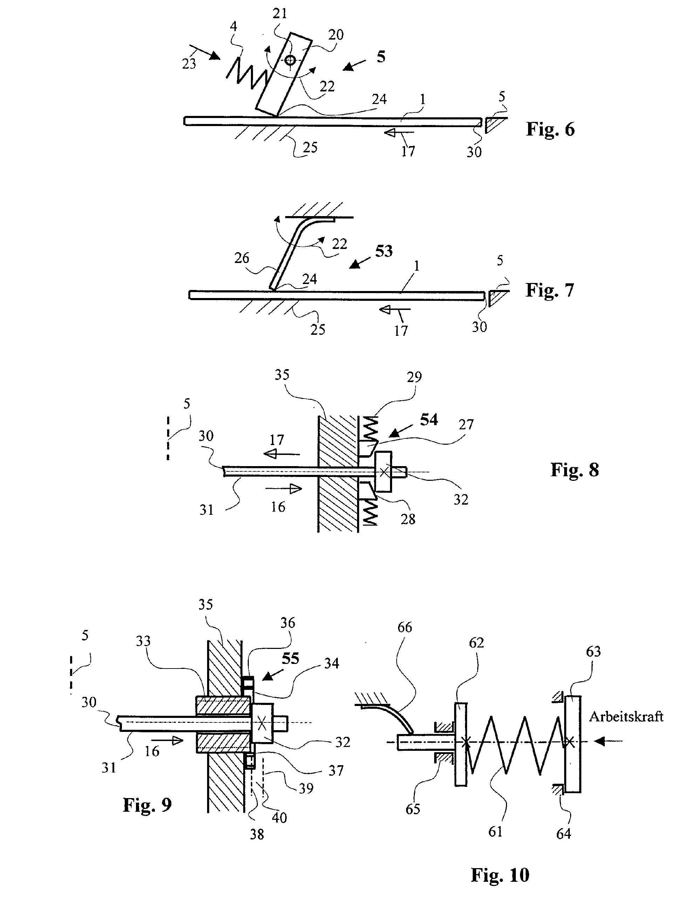

Im Ausführungsbeispiel nach Figur 6 und 7 ist die Art eines mechanischen Klinkengesperres dargestellt. Auch hier ist erkennbar, dass der Betätigungsfläche 30 gegenüberliegend die Kompensationseinrichtung angeordnet ist, die nach Figur 6 aus einer starren mechanisch schwenkbaren Klemmklinke 20 besteht und im Ausführungsbeispiel nach Figur 7 aus einer Klemmfeder 26.

Die Klemmklinke 20 ist in dem Schwenklager 21 gehäusefest schwenkbar gelagert und ist in den Pfeilrichtungen 22 verschwenkbar. Sie wird mittels einer Gegenfeder 4 in der Kraftrichtung 23 vorgespannt, so dass diese immer mit der Klemmkante 24 auf die Oberfläche des Streifens 1 gepresst wird, der auf eine entsprechende Gegenfläche 25 aufliegt.

Bei einer Längenänderung des Streifens in Pfeilrichtung 17 wird dieser damit unter der Klemmkante 24 hindurch geschoben, weil die Klemmklinke 20 im Uhrzeigersinn um das Schwenklager 21 verschwenkt wird. Nach entsprechender Erreichung der Ruhestellung wird dann der Streifen 1 wieder festgehalten.

Gleiches gilt für die Figur 7, wo anstatt einer federvorgespannten Klemmklinke eine Klemmfeder vorgesehen ist, die ebenfalls aufgrund ihres Federvermögens in den Pfeilrichtungen 22 verschwenkbar ausgebildet ist und mit ebenfalls einer Klemmkante 24 auf der Oberfläche des Streifens 1 aufliegt.

Im Ausführungsbeispiel nach den Figuren 8 und 9 wird hingegen ein rundprofilierter oder ovalprofilierter SMA-Draht 31 durch die erfindungsgemäße Kompensationseinrichtung in seiner Längenänderung kompensiert.

Hierbei ist wiederum erkennbar, dass die Betätigungsfläche 30 gegen einen Anschlag 5 gerichtet ist, der nur strichliert angedeutet ist, und so der Kompensationseinrichtung gegenüberliegt. Im Bereich eines feststehenden Gehäuseteils 35 ist eine Bohrung angeordnet, durch welche der Draht 31 hindurchgreift. Im Ausführungsbeispiel nach Figur 8 sind an der Innenseite des Gehäuseteiles 35 in radialer Richtung verschiebbar geführte und federbelastet vorgespannte Verstellkeile 27 vorgesehen, die sich an einem fest mit dem Draht 31 verbundenen Klemmteil 32 anlegen. Damit wird das Klemmteil 32 und auch der gesamte Draht 31 in Richtung seiner Längserstreckung federvorgespannt.

Kommt es nun zu einer unerwünschten Längenänderung des Drahtes in Pfeilrichtung 17, dann wandert das Klemmteil 32 auf den zugeordneten Schrägflächen 28 der Verstellkeile 27 entlang und es kommt damit zu der erwünschten Längenkompensation des Drahtes 31.

Durch die Feder 29 werden die Verstellkeile 27 stets vorgespannt.

Eine ähnliche Darstellung zeigt die Figur 9, wo erkennbar ist, dass im Bereich des Durchbruchs durch das Gehäuseteil 35 ein Gewindeteil 33 angeordnet ist, welches mit einem zugeordneten Innengewinde im Bereich dieses Durchbruchs des Gehäuseteiles 35 kämmt.

Die Verdrehung des Gewindeteiles 33 erfolgt hierbei unter der Kraft einer Drehfeder 34, die mit ihrem einen Ende 36 Gehäuseteil 35 befestigt ist und mit ihrem anderen Ende an dem drehbaren Gewindeteil 33 befestigt ist.

Damit ist das Gewindeteil 33 federbelastet über die Drehfeder 34 frei in dem Gehäuseteil 35 verdrehbar.

Das Gewindeteil 33 wird von dem Draht 31 durchsetzt, und es ist wiederum ein Klemmteil 32 vorhanden.

Bei entsprechender Längenänderung des Drahtes 31 in Pfeilrichtung 17 wird somit das Klemmteil 32 von dem Gewindeteil 33 abgehoben, dadurch wird der Gewindeteil 33 frei und wird durch die Kraft der Drehfeder 34 solange verdreht, bis er wieder kraftschlüssig an dem Klemmteil 32 anschlägt und die Drehung damit festgelegt wird.

Auf diese Weise wird damit ebenfalls eine entsprechende Längenkompensation erreicht.

In Figur 9 ist nur beispielhaft eine derartige Längenänderung dargestellt, wo erkennbar ist, dass in der einen Ruhelage sich die Stirnseite des Gewindeteils 33 bei Position 38 befindet und durch die Verdrehung des Gewindeteils 33 wird diese Stirnkante in die Position 39 gebracht. Es wird damit das Längenspiel 40 des Drahtes 31 ausgeglichen.

Diese Erläuterung des Ausgleichs eines Spiels 40 gilt auch für alle anderen vorbeschriebenen Ausführungsbeispiele sinngemäß.

Es versteht sich von selbst, dass die Kompensationseinrichtung nicht unmittelbar selbst am SMA-Element angesetzt werden muss, sondern sie kann auch indirekt über eine entsprechende Verbindungsbrücke oder ein Verbindungselement an dem SMA-Element angreifen.

Zusammenfassend wird nochmals festgehalten, dass der Gegenstand der vorliegenden Erfindung sich auf einen thermisch steuerbarer Aktuator mit SMA-Element bezieht, für den in Gegenüberstellung zur Betätigungsfläche 30 des SMA-Elementes 1; 31, je nach Ausführungsform, eine Längenkompensationseinrichtung 51; 52; 53; 54; 55 angeordnet ist, die die alterungsbedingte Längenänderung des SMA-Elementes 1; 31 kompensiert. Die Ausführungsformen sind nicht einschränkend beschrieben, sondern verstehen sich beispielhaft für alle möglich Ausführungsformen.

Der Aktuator weist die technische Lehre auf, dass die Längenkompensationseinrichtung 51; 52; 53; 54; 55 den Schaltweg für zu betätigende Kontakte unabhängig von der alterungsbedingten Längenänderung des SMA-Elementes 1; 31 unverändert bleiben lässt, so dass der einmal eingestellte Abstand dauerhaft gewährleistet werden kann.

Eine bevorzugte Ausführungsform des Aktuators besteht darin, dass die Längenkompensationseinrichtung 51 aus einem im SMA-Element 1 angeordnetem Langloch 11 mit Klemmkante 15 in Zusammenwirkung mit einer konischen Sperreinrichtung 6, 7, 14 besteht. Dabei drückt die Druckfeder 7 der konischen Sperreinrichtung das SMA-Element 1 mit seiner Klemmkante 15 so gegen einen Konus 12, dass dieses sich zwar alterungsbedingt in der Länge ändern kann, jedoch eine umgekehrte Längenänderung dessen verhindert.

Eine weitere Ausführungsform ist so aufgebaut, dass die Längenkompensationseinrichtung 52 aus einer Klemmklinke 20 besteht die mit ihrer Klemmkante 24 so auf das SMA-Element 1 wirkt, dass dieses sich zwar alterungsbedingt in der Länge ändern kann, jedoch eine umgekehrte Längenänderung dessen verhindert. Zur erhöhten Sicherheit ist die Klemmklinke 20 mit einer Gegenfeder 4 zwecks Rückstellsicherung federbelastet.

Die nächste Ausführungsform weist an Stelle der Klemmklinke 20 eine Klemmfeder 26 auf, die ebenfalls mit ihrer Klemmkante 24 so auf das SMA-Element 31 wirkt, dass dieses sich zwar alterungsbedingt in der Länge ändern kann, jedoch eine umgekehrte Längenänderung dessen verhindert.

Eine weitere Ausführungsform ist so ausgebildet, dass die Längenkompensationseinrichtung 54 aus wenigstens einem Verstellkeil 27 mit Schrägfläche 28 und einem Klemmteil 32 besteht, welche so auf das SMA-Element 31 wirken, dass dieses sich zwar alterungsbedingt in der Länge ändern kann, jedoch eine umgekehrte Längenänderung dessen verhindert. Auch auf dieser Aktuator kann zur Verstellung des Verstellkeil 27 eine Feder 29 einwirken.

Wiederum eine weitere Ausführungsform ist so ausgebildet, dass die Längenkompensationseinrichtung 55 aus einer Drehfeder 34 besteht, welche mit einem Gewindeteil 33 so zusammenwirkt, dass das SMA-Element 31 sich zwar alterungsbedingt in der Länge ändern kann, jedoch eine umgekehrte Längenänderung dessen verhindert. Dabei ist es egal ob das Gewindeteil 33 zur altersbedingten Verstellung des SMA-Elementes 31 einem festen Gehäuseteil 35 und einer entsprechend ausgebildeten Hülse oder zwischen der Hülse und dem SMA-Elementes 31 selbst ausgebildet ist, wobei die Hülse dann entsprechend an ihrer inneren oder äußeren Zylinderfläche glatt ausgebildet ist, um entsprechend verdrehbar zu sein. Es geht lediglich um die Kompensationswirkung der altersbedingten Längenänderung des SMA-Elementes 31, welche mittels der ausdehnungsabhängigen Verdrehung durch die Schraubenfeder erzwungenen wird.

Die Figur 10 zeigt eine weitere Ausführungsform der vorliegenden Erfindung. Bei dieser Ausführungsform kann die Längenänderung an Stelle bei einem Zugelement bei einem Dehnelement kompensiert werden, so dass immer ein konstanter Abstand beim Schaltvorgang gewährleistet werden kann.

Die Kompensation kann somit für SMA Elemente die den Dehneffekt einprogrammiert haben (das SMA dehnt sich z. B. bei Erwärmung aus) angewendet werden.

Die SMA Druckfeder 61 ist bei dem Beispiel nach Figur 10 eingespannt zwischen Anschlag 64 und 65 sowie fix verbunden mit Teil 62 und Teil 63. Bei Erwärmung der SMA Druckfeder dehnt sich diese aus und bewegt Teil 63 gegen die Richtung einer Arbeitskraft. Bei Abkühlung geht die Druckfeder in die ursprüngliche Lage zurück und Teil 63 liegt dann an Anschlag Teil 64 an.

Bei Verkürzung der Druckfeder wird die gegenüberliegende Auflage 62, die mit der Druckfeder fix verbunden ist, nachgerückt und durch die Klemmfeder 66 gehalten. Die Stellmechanismen können wie für die ziehenden Fälle beschrieben ausgebildet sein.

### Zeichnungslegende

- 1: SMA-Streifen
- 2: Hebelbolzen
- 3: Hebel
- 4: Gegenfeder
- 5: Anschlag
- 6: konischer Bolzen
- 7: Druckfeder
- 8: Zugfeder
- 9: Mitnehmer
- 10: Lagerbolzen (Schwenklager)
- 11: Langloch
- 12: Konus
- 13: Scheibe
- 14: Mutter
- 15: Klemmkante
- 16: Pfeilrichtung
- 17: Pfeilrichtung
- 18: Pfeilrichtung
- 19: Pfeilrichtung
- 20: Klemmklinke
- 21: Schwenklager
- 22: Pfeilrichtung
- 23: Kraftrichtung
- 24: Klemmkante
- 25: Gegenfläche
- 26: Klemmfeder
- 27: Verstellkeil
- 28: Schrägfläche
- 29: Feder
- 30: Betätigungsfläche
- 31: SMA-Draht
- 32: Klemmteil
- 33: Gewindeteil
- 34: Drehfeder
- 35: Gehäuseteil
- 36: Ende
- 37: Ende
- 38: Position
- 39: Position
- 40: Spiel
- 41: Stirnkante 41'
- 42: Pfeilrichtung

- 51: Längenkompensationseinrichtung
- 52: Längenkompensationseinrichtung
- 53: Längenkompensationseinrichtung
- 54: Längenkompensationseinrichtung
- 55: Längenkompensationseinrichtung

- 61: SMA Druckfeder
- 62: Auflage
- 63: Teil
- 64: Teil
- 65: Anschlag
- 66: Anschlag

## Patentansprüche

1. Thermisch steuerbarer Aktuator mit SMA-Element, **dadurch gekennzeichnet, dass** in Gegenüberstellung zu einer Betätigungsfläche (30) des SMA-Elementes (1; 31) eine Längenkompensationseinrichtung (51; 52; 53; 54; 55) angeordnet ist, die die alterungsbedingte Längenänderung des SMA-Elementes (1; 31) kompensiert.

2. Aktuator nach Anspruch 1, **dadurch gekennzeichnet, dass** die Längenkompensationseinrichtung (51; 52; 53; 54; 55) den Schaltweg für zu betätigende Kontakte unabhängig von der alterungsbedingten Längenänderung des SMA-Elementes (1; 31) unverändert bleiben lässt, so dass der einmal eingestellte Abstand dauerhaft gewährleistet werden kann.

3. **Aktuator nach einem der Ansprüche 1 oder 2, dadurch gekennzeichnet, dass** die Längenkompensationseinrichtung (51) aus einem im SMA-Element (1) angeordnetem Langloch (11) mit Klemmkante (15) in Zusammenwirkung mit einer konischen Sperreinrichtung (6, 7, 14) besteht.

4. Aktuator nach Anspruch 3, **dadurch gekennzeichnet, dass** die Druckfeder (7) der konischen Sperreinrichtung das SMA-Element (1) mit seiner Klemmkante (15) so gegen einen Konus (12) drückt, dass dieses sich zwar alterungsbedingt in der Länge ändern kann, jedoch eine umgekehrte Längenänderung dessen verhindert.

5. Aktuator nach einem der Ansprüche 1 oder 2, **dadurch gekennzeichnet, dass** die Längenkompensationseinrichtung (52) aus einer Klemmklinke (20) besteht die mit ihrer Klemmkante (24) so auf das SMA-Element (1) wirkt, dass dieses sich zwar alterungsbedingt in der Länge ändern kann, jedoch eine umgekehrte Längenänderung dessen verhindert.

6. Aktuator nach Anspruch 5, **dadurch gekennzeichnet, dass** die Klemmklinke (20) mit einer Gegenfeder (4) zwecks Rückstellsicherung federbelastet ist.

7. Aktuator nach einem der Ansprüche 1 oder 2, **dadurch gekennzeichnet, dass** die Längenkompensationseinrichtung (53) aus einer Klemmfeder (26) besteht die mit ihrer Klemmkante (24) so auf das SMA-Element (31) wirkt, dass dieses sich zwar alterungsbedingt in der Länge ändern kann, jedoch eine umgekehrte Längenänderung dessen verhindert.

8. Aktuator nach einem der Ansprüche 1 oder 2, **dadurch gekennzeichnet, dass** die Längenkompensationseinrichtung (54) aus wenigstens einem Verstellkeil (27) mit Schrägfläche (28) und einem Klemmteil (32) besteht, welche so auf das SMA-Element (31) wirken, dass dieses sich zwar alterungsbedingt in der Länge ändern kann, jedoch eine umgekehrte Längenänderung dessen verhindert.

9. Aktuator nach Anspruch 8, **dadurch gekennzeichnet, dass** zur Verstellung des Verstellkeil (27) eine Feder (29) auf diesen einwirkt.

10. Aktuator nach einem der Ansprüche 1 oder 2, **dadurch gekennzeichnet, dass** die Längenkompensationseinrichtung (55) aus einer Drehfeder (34) besteht, welche mit einem Gewindeteil (33) so zusammenwirkt, dass das SMA-Element (31) sich zwar alterungsbedingt in der Länge ändern kann, jedoch eine umgekehrte Längenänderung dessen verhindert.

11. Aktuator nach einem der Ansprüche 1 bis 10, **dadurch gekennzeichnet, dass** die Längenkompensationseinrichtung (51; 52; 53; 54; 55) auf einen Hebelmechanismus wirkt, um entsprechend der Hebelverhältnisse einen vergrößerten Schaltweg zu erreichen.
